# EUROPÄISCHE PATENTSCHRIFT

(11) **EP 1 975 589 B1**
(45) Veröffentlichungstag und Bekanntmachung des Hinweises auf die Patenterteilung: **03.10.2012**
(21) Anmeldenummer: 08102957.1
(22) Anmeldetag: 27.03.2008
(51) Int. Cl.: G01L 9/00, G01L 3/24, G01L 11/02

(54) **Druckmessvorrichtung und Verfahren zur Bestimmung der Windkraft auf Windenergieanlagen sowie Verwendung der Druckmessvorrichtung und des Verfahrens**
Pressure measurement device and method for determining the power of the wind on wind energy facilities, use of the pressure measurement device and method
Dispositif de mesure de pression et procédé de détermination de la force du vent sur des éoliennes et utilisation du dispositif de mesure de pression et du procédé

(30) Priorität: 29.03.2007 DE 102007015179
(43) Veröffentlichungstag der Anmeldung: 01.10.2008
(73) Patentinhaber: SIEMENS AKTIENGESELLSCHAFT, 80333 München (DE)
(72) Erfinder: Bosselmann, Thomas, 91080, Marloffstein (DE)

(56) Entgegenhaltungen:
- WO-A1-2006/039903
- DE-A1- 2 137 188
- DE-A1- 3 000 678
- DE-A1- 3 106 624
- GB-A- 1 356 783
- US-B1- 6 233 746
- US-B1- 6 490 931
- LI X ET AL: "Embedded Fiber Bragg Grating Sensors in Polymer Structures Fabricated by Layered Manufacturing" JOURNAL OF MANUFACTURING PROCESSES, SOCIETY OF MANUFACTURING ENGINEERS, DEARBORN, MI, US LNKD- DOI:10.1016/S1526-6125(03)70043-7, Bd. 5, Nr. 1, 1. Januar 2003 (2003-01-01), Seiten 78-86, XP025410183 ISSN: 1526-6125 [gefunden am 2003-01-01]

## Beschreibung

Die vorliegende Erfindung betrifft ein Rotorblatt gemäß Anspruch 1-6, eine Windenergieanlage und ein Verfahren.

Moderne Windenergieanlagen bestehend aus einem Turm und einer auf dem Turm drehbar gelagerten Gondel mit einem Rotor. Ein hoher Wirkungsgrad, eine minimale Schallemission, ein geringer Materialeinsatz und eine hohe Lebensdauer sind die Kriterien für die Konzipierung und Optimierung von solchen Windenergieanlagen. Sie werden zunehmend in immer höheren Leistungsklassen hergestellt. Ziel ist es, eine immer höhere Effektivität sowie eine gesteigerte Ausgangsleistung bezogen auf den Platzbedarf der Anlage zu erreichen. Besonders im Off-Shore-Bereich müssen aufgrund der aufwändigen Fundamentierung größere Windenergieanlagen installiert werden. Solche Windenergieanlagen haben heutzutage Rotordurchmesser von bis zu 130 m. Die immer größer werdenden Abmessungen bringen unterschiedliche Probleme bei der Auslegung und dem Betrieb der Anlage mit sich. Zum einen macht sich aufgrund des größeren Rotordurchmessers die Höhenschichtung der Windgeschwindigkeit bemerkbar. Dabei sind die einzelnen dem Rotor zugeordneten Rotorblätter zum Teil stark unterschiedlichen Windgeschwindigkeiten ausgesetzt. Bei einer starren Rotorblattstellung (Pitch) arbeitet dadurch jedes Rotorblatt mit unterschiedlicher Effizienz. Zum anderen wirkt sich eine unterschiedliche Windlast problematisch auf die einzelnen Rotorblätter aus.

Eine zu hohe Windlast auf ein einzelnes Rotorblatt kann zu starker Durchbiegung und somit zur Schädigung des Rotorblatts führen. Eine unterschiedlich hohe Windlast auf die verschiedenen Rotorblätter führt zudem zu einem seitlichen Drehmoment auf die Welle, über welche der Rotor drehbar gelagert mit einem im Turm der Windenergieanlage angeordneten Getriebe verbunden ist. Durch ein solches Drehmoment wird das Getriebe belastet, was häufig zum frühzeitigen Ausfall von Getriebeteilen führen kann.

Zum Messen von Luftdrücken können so genannte Dosenbarometer, die auch Aneroid-Barometer genannt werden, verwendet werden. Ein derartiger Barometer besteht aus einem dosenartigen mit einer Membrane versehenen Hohlkörper aus dünnem Blech, in welchem ein Vakuum oder Unterdruck herrscht. Durch den Luftdruck verformt sich die Membrane. Über eine Mechanik wird diese Verformung auf einen Zeiger übertragen, so dass der vorherrschender an der Zeigerstellung abgelesen werden kann.

In der EP 0 970 308 B1 ist eine Windenergieanlage mit einem Windgeschwindigkeitsmesssystem angegeben. Das Windgeschwindigkeitsmesssystem ist dabei als ein Laser-Anemometrie-System ausgeführt. Hierbei wird mittels eines Lasers Laserlicht ausgesendet und Partikel in der Luft bestrahlt werden. Das Laserlicht wird von den bestrahlten Partikeln zum Teil zurückgestreut und von einem Detektor erfasst. Mittels einer Analyse des zurückgestreuten Laserlichtes kann auf die Geschwindigkeit der Partikel rückgeschlossen werden. Da die Geschwindigkeit der Partikel mit der Windgeschwindigkeit übereinstimmt, wird auf diese Weise die Windgeschwindigkeit vor der Windturbine bestimmt. Eine solche Messung ist relativ aufwändig und kann in der Regel nur von Servicepersonal stichprobenartig durchgeführt werden.

Aus der DE 31 06 624 A1 ist ein Aufbau zur Regelung des Betriebes einer Windenergieanlage bekannt. Dabei ist ein Rotorblatt einer Windenergieanlage angegeben, das eine eine Außenhülle ausbildende Wand und mindestens eine innerhalb des Rotorblattes angeordnete Druckmessvorrichtung aufweist. Die Druckmessvorrichtung weist dabei eine druckabhängig verformbare Membrane auf.

Aus der WO 2006/039903 ist ebenfalls ein Aufbau zur Regelung des Betriebes einer Windenergieanlage bekannt. Dafür ist ein Rotorblatt einer Windenergieanlage angegeben, das eine eine Außenhülle ausbildende Wand und mindestens eine innerhalb des Rotorblattes angeordnete Druckmessvorrichtung umfasst. Dabei umfasst das Rotorblatt in einer Alternative eine Druckleitung, die mit der Druckmessvorrichtung in Wirkverbindung steht und zur Rotorblattwand derart geführt ist, dass der Druck an der entsprechenden Seite der Außenhülle aufnehmbar ist.

Aus der Li X. et al.; "Embedded Fiber Bragg Grating Sensors in Polymer Structures Fabricated by Layered Manufacturing", Bd. 5, Nr. 1, 01.01.2003, Seiten 78 bis 86 ist die Herstellung einer zur Druckdifferenzmessung verwendbaren Membran mit einem integrierten Faser-Bragg-Gitter-Sensor bekannt.

Aufgabe der Erfindung ist es, ein Rotorblatt einer Windenergieanlage mit mindestens einer Druckmessvorrichtung, eine Windenergieanlage mit mindestens einem derartigen Rotorblatt, ein Verfahren zur Bestimmung einer auf das Rotorblatt wirkenden Windkraft sowie eine Verwendung des Verfahrens anzugeben, welche dauerhaft und einfach zu handhaben sind.

Zur Lösung der Aufgabe wird ein Rotorblatt entsprechend den Merkmalen des unabhängigen Patentanspruches 1 angegeben.

Demgemäß soll die Druckmessvorrichtung der eingangs bezeichneten Art, unter anderen derart ausgestaltet sein, dass mindesten ein optischer Dehnungssensor kraftschlüssig mit der mindestens einen Membrane verbunden ist.

Mit dem optischen Dehnungssensor kann eine um Größenordnungen höhere Messempfindlichkeit erreicht werden. Selbst kleinste

Verformungen der Membrane sind somit messbar. Zudem ist die Installation des optischen Dehnungssensors sehr einfach. So kann der Dehnungssensor beispielsweise auf die Membrane geklebt werden. Ein weiterer Vorteil ist, dass der optische Dehnungssensor den Einsatzort der Druckmessvorrichtung nicht einschränkt.

Erfindungsgemäß weist die Druckmessvorrichtung eine weitere mit einem weiteren Dehnungssensor versehene Membrane auf. Dabei sind die beiden Membranen auf einander gegenüberliegenden Seiten des Hohlkörpers angeordnet. Dadurch ist eine redundante Messung zur Erhöhnung der Messsicherheit möglich.

Die Druckmessvorrichtung kann noch folgende Merkmale aufweisen:
- Es kann von Vorteil sein, wenn der Dehnungssensor als Faser-Bragg-Gitter-Sensor, der durch Einschreiben eines Bragg-Gitters in einen Lichtwellenleiter hergestellt werden kann, ausgeführt ist. Die geometrische Abmessung eines solchen vorteilhaften Faser-Bragg-Gitter-Sensors wird im Wesentlichen durch den verwendeten Lichtwellenleiter bestimmt. Der folglich äußerst geringe Platzbedarf von Faser-Bragg-Gitter-Sensoren erleichtert deren Montage auf der Membrane der Druckmessvorrichtung. Weiterhin ist es vorteilhaft, dass zur Erfassung von Messgrößen keine Ein- und Auskopplung des Lichtsignals aus dem Lichtwellenleitern erforderlich ist. Die Lichtführung erfolgt bei Faser-Bragg-Gitter-Sensoren stets innerhalb des Lichtwellenleiters, wodurch eine besonders unempfindliche Messgrößenerfassung ermöglicht wird.
- Es kann günstig sein, wenn mindestens ein Temperatursensor zur Bestimmung der Temperatur des Hohlkörpers vorgesehen ist. Da der Druck im Hohlkörper temperaturabhängig ist und somit die druckabhängige Verformung der Membrane ebenfalls temperaturabhängig ist, kann mit der Temperaturbestimmung am Hohlkörper ein Korrekturwert ermittelt werden, mit welchem die Temperaturabhängigkeit der Membranverformung kompensierbar ist.
- Vorteilhafterweise kann der Temperatursensor aus vorgenannten Gründen als Faser-Bragg-Gitter-Sensor ausgeführt sein.
- Günstiger Weise kann der Hohlkörper aus einem isolierenden Werkstoff, insbesondere Glas oder Polymethylmethacrylat, ausgebildet sein. Der thermische Ausdehnungskoeffizient eines derartigen Werkstoffes sollte dabei möglichst gering sein, um die Temperaturbeeinflussung der Membranverformung zu minimieren. Zudem beeinflusst ein derart ausgeführter Hohlkörper keine elektrischen Entladungen, wie sie beispielsweise als Blitze bei einem Gewitter auftreten.

Bei dem erfindungsgemäßen Rotorblatt handelt es sich um ein Rotorblatt einer Windenergieanlage, umfassend eine eine Außenhülle ausbildende Wand und mindestens eine innerhalb des Rotorblattes angeordnete erfindungsgemäße Druckmessvorrichtung.

Bei dem erfindungsgemäßen Rotorblatt ergeben sich die vorstehend für die erfindungsgemäße Druckmessvorrichtung erläuterten Vorteile. Zudem werden mit der Verwendung einer derartigen Druckmessdose beispielsweise elektrische Zuleitungen in das Rotorblatt vermieden. Da die Druckmessvorrichtung unterhalb der Außenhülle im Rotorblatt integriert ist, ergeben sich keine von der Druckmessvorrichtung ausgehende aerodynamischen Verzerrungen und Geräusche.

Vorteilhafte Ausgestaltungen des erfindungsgemäßen Rotorblatts gehen aus den von Anspruch 1 abhängigen Ansprüchen hervor. Dabei kann die Ausführungsform nach Anspruch 1 mit den Merkmalen abhängiger Ansprüche oder vorzugsweise auch denen aus mehreren dieser Ansprüche kombiniert werden. Demgemäß kann das Rotorblatt noch folgende Merkmale aufweisen:
- So kann es vorteilhaft sein, wenn mindestens eine Druckleitung, die mit einer Membrane der Druckmessvorrichtung in Wirkverbindung steht und zur Druckaufnahme an der Rotorblattwand zu dieser geführt ist, vorgesehen ist. Um den Druck an einer bestimmten Stelle der Rotorblattaußenhülle zu messen, braucht somit der Holkörper der Druckmessvorrichtung nicht an dieser Stelle positioniert zu sein. Es genügt die Druckleitung von dieser Stelle aus zu einer Membrane der Druckmessvorrichtung zu führen, wobei der Hohlkörper beliebig im Rotorblatt positioniert sein kann.
- Erfindungsgemäß sind zwei Druckleitungen vorgesehen, die jeweils mit einer Membrane der Druckmessvorrichtung in Wirkverbindung stehen und zur Rotorblattwand derart geführt sind, dass der Druck an der Wind zugewandten Seite der Außenhülle von einer der beiden Druckleitungen aufnehmbar ist und der Druck an der Wind abgewandten Seite der Außenhülle von der anderen Druckleitung aufnehmbar ist. Mit der Kenntnis der beiden Drücke kann ein Differenzdruck bestimmt werden, aus welchem die Kraft auf das Rotorblatt ermittelbar ist.
- Vorteilhafterweise können mehrere in Ausbreitungsrichtung der Längsachse des Rotorblattes verteilte Druckmessvorrichtungen vorgesehen sein. Somit ist es möglich Windlastunterschiede zwischen dem Rotorblattfuß und der Rotorblattspitze und damit den Lastverlauf entlang der Rotorblattlängsachse zu ermitteln.

Weiter wird mit der Erfindung eine Windenergieanlage entsprechend den Merkmalen des unabhängigen Anspruchs 7 angegeben. Bei der erfindungsgemäßen Windenergieanlage handelt es sich um eine Windenergieanlage mit zumindest einem erfindungsgemäßen Rotorblatt.

Bei der erfindungsgemäßen Windenergieanlage ergeben sich die vorstehend für die erfindungsgemäße Druckmessvorrichtung und das erfindungsgemäße Rotorblatt erläuterten Vorteile.

Vorteilhafte Ausgestaltungen der erfindungsgemäßen Windenergieanlage gehen aus den von Anspruch 7 abhängigen Ansprüchen hervor. Dabei kann die Ausführungsform nach Anspruch 7 mit den Merkmalen abhängiger Ansprüche oder vorzugsweise auch denen aus mehreren dieser Ansprüche kombiniert werden. Demgemäß kann die Windenergieanlage noch folgende Merkmale aufweisen:
- So kann es vorteilhaft sein, wenn mehrere um ihre Längsachse unabhängig voneinander drehbare Rotorblätter vorgesehen sind. Somit kann jedes Rotorblatt individuell in seiner Kraftaufnahme optimiert werden.
- Vorteilhafterweise kann dabei jedes Rotorblatt mit mindestens einer Druckmessvorrichtung versehen sein und eine Rotorblattsteuereinheit vorgesehen sein, mit welcher die jeweilige Drehposition jedes Rotorblatts um seine Längsachse in Abhängigkeit der mittels der Auswerteeinheit bestimmten Windkraft am jeweiligen Rotorblatt steuerbar ist. Somit kann jedes Rotorblatt durch individuelle Drehung um seine Längsachse derart ausgerichtet werden, dass die Windlast an jedem Rotorblatt gleichmäßig ist, eine optimierte Windkraftübertragung gewährleistet ist und bei Bedarf, beispielsweise bei Überbelastung, das entsprechende Rotorblatt entlastet wird. Damit ist eine effektive Ausnutzung der Windenergie bei gleichzeitiger Betriebssicherheit gewährleistet.

Mit der Erfindung werden ferner ein Verfahren entsprechend den Merkmalen des unabhängigen Anspruchs 10 und eine Verwendung des erfindungsgemäßen Verfahrens entsprechend den Merkmalen des unabhängigen Anspruchs 11 angegeben.

Bei dem erfindungsgemäßen Verfahren handelt es sich um ein Verfahren zur Bestimmung der auf das erfindungsgemäße Rotorblatt wirkenden Windkraft, bei welchem mittels einer Auswerteeinheit der Druck an der Wind zugewandten Seite der Außenhülle mit dem Druck an der Wind abgewandten Seite der Außenhülle verglichen, ein Vergleichswert bestimmt und aus dem Vergleichswert ein Messwert für die auf das Rotorblatt wirkende Windkraft bestimmt wird.

Bei der erfindungsgemäßen Verwendung handelt es sich um eine Verwendung des erfindungsgemäßen Verfahrens zum optimierten Betrieb und/oder Schutz der erfindungsgemäßen Windenergieanlage, bei welcher die Windkraft an jedem einzelnen Rotorblatt bestimmt wird und in Abhängigkeit der jeweiligen Windkraft jedes Rotorblatt um seine Längsachse ausgerichtet wird.

Bevorzugte, jedoch keinesfalls einschränkende Ausführungsbeispiele der Erfindung werden nunmehr anhand der Zeichnung näher erläutert. Zur Veranschaulichung ist die Zeichnung nicht maßstäblich ausgeführt und gewisse Merkmale sind schematisiert dargestellt. Im Einzelnen zeigen
- Figur 1: eine erfindungsgemäße Druckmessvorrichtung mit zwei Dehnungssensoren und einem Temperatursensor,
- Figur 2: eine Windenergieanlage mit schematisch dargestellten Druckmessvorrichtungen zur Windkraftbestimmung,
- Figur 3: einen Querschnitt durch ein Rotorblatt gemäß Figur 2 mit zwei Druckmessvorrichtungen an der der Rotorblattaußenwand,
- Figur 4: einen Querschnitt durch ein Rotorblatt gemäß Figur 2 mit einer Druckmessvorrichtungen und zwei Druckleitungen und
- Figur 5: eine Windenergieanlage mit Druckmesselementen an jedem Rotorblatt

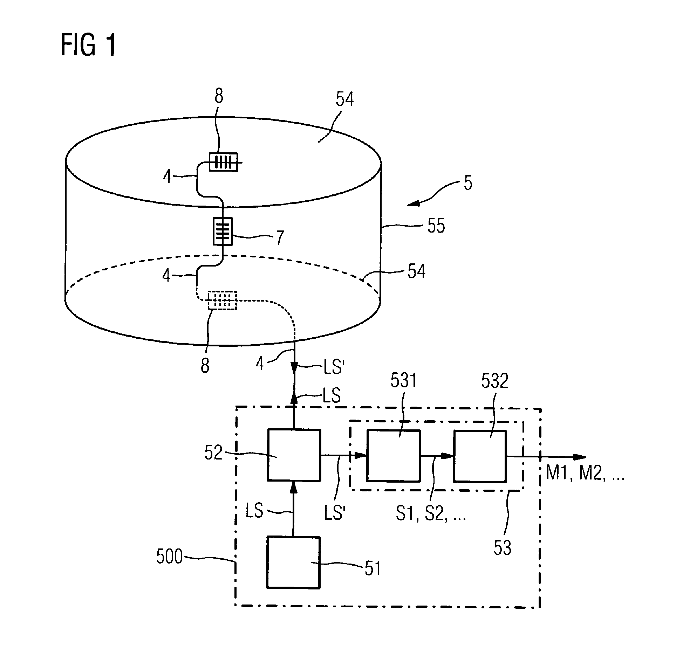

Einander entsprechende Teile sind in den Figuren 1 bis 5 mit denselben Bezugszeichen versehen.

In Figur 1 ist eine erfindungsgemäße Druckmessvorrichtung 5 für eine Rotorblatt 32 einer Windenergieanlage 10 mit einem gasdicht abgeschlossenen Hohlkörper 55. Der Hohlkörper 55 ist beispielhaft als Hohlzylinder ausgeführt. Er kann aber auch als Würfel oder Quader ausgeführt sein. Der Deckel und der Boden des Hohlzylinders 55 sind als verformbare Membranen 54 ausgeführt, die sich je nach Verhältnis des Gasdrucks innerhalb und außerhalb des Hohlkörpers 55 druckabhängig, beispielsweise konkav oder konvex, verformen. Zur Quantifizierung der Verformung sind Dehnungssensoren 8 vorgesehen, die jeweils kraftschlüssig mit den entsprechenden Membranen 54 verbunden sind. Um die Temperatur des Hohlkörpers 55 bestimmen zu können, ist dieser mit einem Temperatursensor 7 versehen. In Figur 1 ist dieser Temperatursensor 7 am Mantel des Hohlzylinders 55 angebracht. Der Mantel ist derart stabil ausgeführt, dass er sich bei einer Druckänderung nicht verformt. Als Dehnungssensoren 8 und Temperatursensoren 7 eignen sich insbesondere die schematisch dargestellten Faser-Bragg-Gitter-Sensoren, die jeweils unterschiedliche spezifische Schwerpunktswellenlängen - die so genannten Bragg-Wellenlängen - aufweisen können. Die Faser-Bragg-Gitter-Sensoren 7, 8 und werden von einem Lichtsignal LS, das von einer breitbandigen Lichtquelle 51 erzeugt wird, abgefragt. Über einen Koppler 52 und einen oder mehrere Lichtwellenleiter 4 wird das Lichtsignal LS in die Faser-Bragg-Gitter-Sensoren 7, 8 eingespeist. In jedem Faser-Bragg-Gitter-Sensor 7, 8 wird von dem eingespeisten Lichtsignal LS ein Anteil mit der jeweiligen Schwerpunktswellenlänge als Teil-Reflex-Signal zurückreflektiert. Der übrige Teil des Lichtsignals LS passiert dagegen den betreffenden Faser-Bragg-Gitter-Sensor 7, 8 und trifft gegebenenfalls auf den nächsten Faser-Bragg-Gitter-Sensor 7, 8. Am Koppler 52 steht dann ein von den Faser-Bragg-Gitter-Sensoren 7, 8 reflektiertes Lichtsignal LS' an, das sich aus den Teil-Reflex-Lichtsignalen der einzelnen Faser-Bragg-Gitter-Sensoren 7, 8 zusammensetzt. Die Schwerpunktswellenlängen von mehreren Faser-Bragg-Gitter-Sensoren 7, 8 eines Lichtwellenleiters 4 müssen jedoch nicht gezwungenermaßen unterschiedlich sein, wenn zur Unterscheidung der Antwortsignale verschiedene Faser-Bragg-Gitter-Sensoren 7, 8, beispielsweise ein so genanntes "optical time domain reflectometer" verwendet wird.

Erfahren die Faser-Bragg-Gitter-Sensoren 8 eine Verformung und der Faser-Bragg-Gitter-Sensor 7 eine Temperaturänderung, ändert sich deren Schwerpunktswellenlänge entsprechend dem Betrag der Messgröße (Verformung bzw. Temperaturänderung) und damit der Wellenlängengehalt (= das Wellenlängenspektrum) des vom betreffenden Sensor 7, 8 reflektierten Teil-Reflex-Lichtsignals. Diese Veränderung im Wellenlängengehalt dient als Maß für die zu erfassende Messgröße.

Es ist aber auch ein Transmissionsbetrieb denkbar (in den Figuren nicht gezeigt). Hier muss im Gegensatz zum Reflektionsbetrieb das gesamte von der Lichtquelle 51 ausgesandte Wellenlängenspektrum auf fehlende Wellenlängenbereiche untersucht werden. Denn diese fehlenden Wellenlängenbereiche entsprechen den jeweiligen Schwerpunktswellenlängen der einzelnen Sensoren.

Das von den Faser-Bragg-Gitter-Sensoren 7, 8 herkommende, in den Koppler 52 wieder eingespeiste Lichtsignal LS' wird vom Koppler 52 zu einer Auswerteeinheit 53 geleitet. Diese umfasst insbesondere einen optoelektrischen Wandler und einen Analog/Digital-Wandler, welche zusammengefasst mit 531 bezeichnet sind, sowie einen digitalen Signalprozessor 532. Der optoelektrische Wandler weist vorteilhafterweise ein spektralselektives Element zur Selektion der einzelnen Teilreflexlichtsignale, beispielsweise in Gestalt eines Polychromators, und einen gegebenenfalls auch mehrteiligen Lichtempfänger auf. Zur Analyse des Lichtspektrums sind Gitter- oder Beugungsspektrometer denkbar. Bei der Verwendung eines "optical time domain reflectometers" genügt beispielsweise auch ein kostengünstiges Kantenfilter. Im Transmissionsbetrieb kann auf den Koppler 52 verzichtet werden. Hier wird an einem Ende des Lichtwellenleiters 4 das Lichtsignal LS mittels der Lichtquelle 51 eingekoppelt und am anderen Ende des Lichtwellenleiters 4 von einem optoelektrischen Wandler detektiert. Im Anschluss an die optoelektronische Wandlung findet im Analog/Digital-Wandler eine Analog/Digital-Wandlung statt. Die Verformungs- und Temperaturmesswerte werden somit als digitalisierte Ausgangssignale S1, S2, ... des Analog/Digital-Wandlers wiedergegeben und dem digitalen Signalprozessor 532 zugeführt. Hier werden aus den Verformungswerten und den Temperaturmesswerten Messwerte D1, D2, ... für den auf die Druckmessvorrichtung 5 wirkenden Druck errechnet. Die Temperaturmesswerte dienen dabei zur Kompensation der Temperaturabhängigkeit der Membranverformung.

Die Lichtquelle 51, der Koppler 52 und die Auswerteeinheit 53 sind in der Sende-/Empfangseinheit 500 zusammengefasst, wobei die Lichtquelle 51 und der Koppler 52 als Einspeiseeinheit zur Einspeisung des Lichtsignals LS in die Faser-Bragg-Gitter-Sensoren aufgefasst werden kann. In einem anderen nicht gezeigten Ausführungsbeispiel können diese Untereinheiten oder Teile davon voneinander getrennt, also nicht als gemeinsame Sende-/Empfangseinheit 500, ausgebildet sein. Außerdem ist auch eine rein analoge Auswertung, beispielsweise mittels einer fest verdrahteten elektronischen Schaltung möglich. Dann wäre kein Analog/Digital-Wandler vorhanden und die Auswerteeinheit 53 mittels Analogtechnik realisiert.

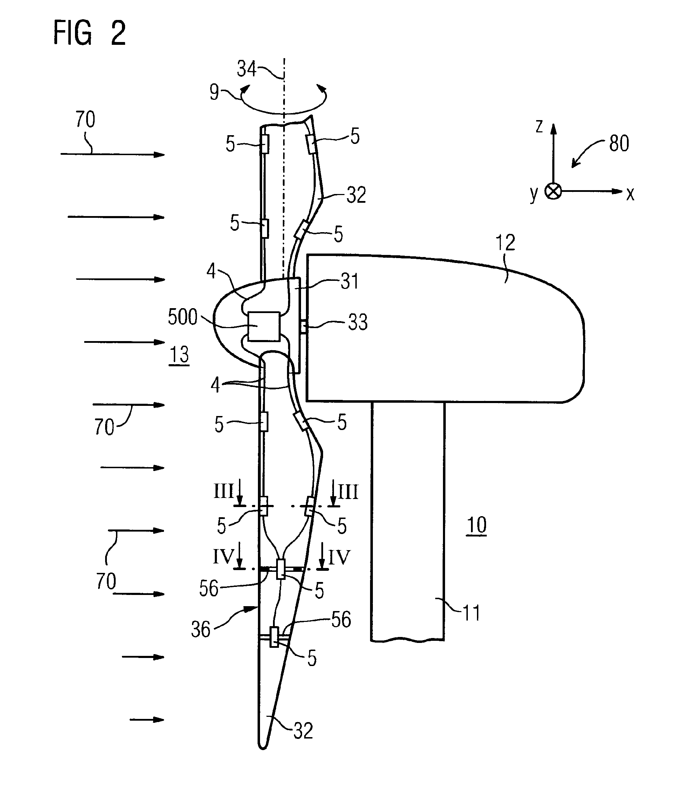

In Figur 2 ist eine Windenergieanlage 10 mit einer Windkraftmessvorrichtung dargestellt. Die Windenergieanlage 10 weist einen Turm 11 und eine auf dem Turm 11 drehbar gelagerte Gondel 12 auf. Die Drehachse der Gondel 12 fällt in der Regel mit der Längsachse des Turmes 11 zusammen. An der Gondel 12 ist ein drehbar gelagerter Rotor 13 über eine im Wesentlichen horizontal angeordnete Rotorwelle 33 mit der Gondel 12 verbunden. Die Rotationsenergie des Rotors 13 wird dabei über die Rotorwelle 33 an einen innerhalb der Gondel 12 angeordneten Generator zur Energieerzeugung weitergeleitet. Vorzugsweise ist zwischen Rotor 13 und Generator ein Getriebe angeordnet, um die Umdrehungsgeschwindigkeit des Rotors 13 an einen optimalen Generatorbetrieb anpassen zu können. Der Übersicht halber sind das Getriebe und der Generator in Figur 2 nicht dargestellt. Der Rotor 13 selbst weist eine Nabe 31 und zwei oder mehrere an der Nabe 31 befestigten Rotorblätter 32 auf, die unabhängig voneinander um ihre Längsachsen 34 drehbar sind (angedeutet durch den Pfeil 9). Das Drehen des jeweiligen Rotorblatts 32 erfolgt beispielsweise mittels eines hydraulischen Antriebs oder mittels eines Schrittmotors (in den Figuren nicht dargestellt).

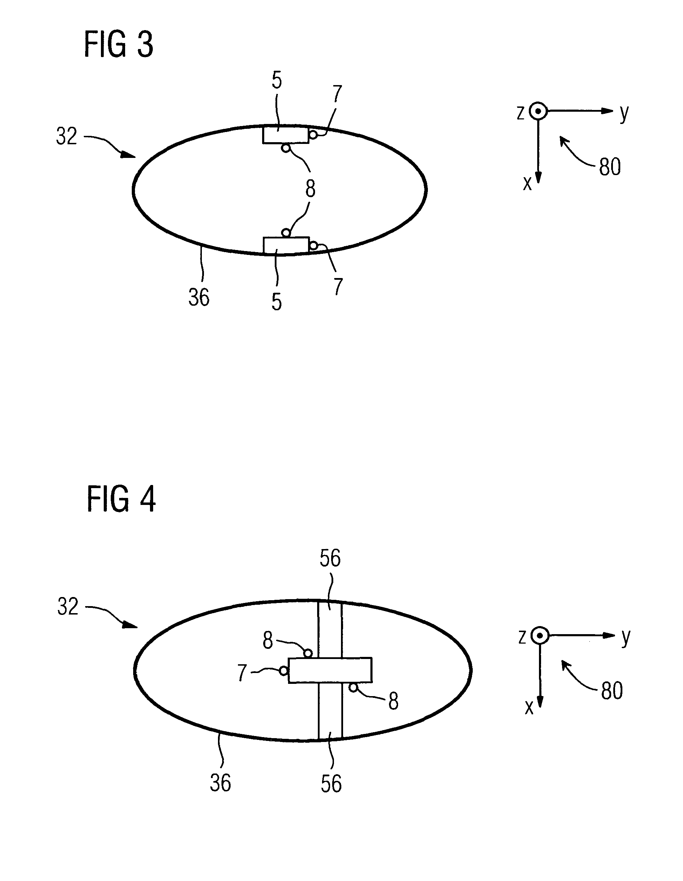

Die Windkraftmessvorrichtung weist in diesem Ausführungsbeispiel mehrere innerhalb eines Rotorblatts 32 angeordnete erfindungsgemäße Druckmessvorrichtungen 5 auf. Zur Bestimmung der auf das Rotorblatt 32 wirkenden Windkraft gibt es zwei Möglichkeiten. Beide sind in Figur 2 schematisch angedeutet. Bei einem ersten vergleichenden Beispiel sind zur Bestimmung der Windkraft zwei Druckmessvorrichtungen 5 vorgesehen, wobei eine der beiden Druckmessvorrichtungen 5 an der Wind zugewandten Seite der als Außenhülle ausgebildeten Rotorblattwand 36 angeordnet ist, während die andere Druckmessvorrichtung 5 an der Wind abgewandten Seite der Rotorblattwand 36 positioniert ist. Beide Druckmessvorrichtungen 5 messen dort direkt den vorherrschenden Druck. In Figur 3 ist dieses vergleichende Beispiel in einem Querschnitt III durch das Rotorblatt 32 dargestellt. Beim Ausführungsbeispiel ist zur Bestimmung der Windkraft lediglich eine Druckmessvorrichtung 5 nötig. Diese ist aber mit zwei Druckleitungen 56 verbunden, wobei eine der beiden Druckleitungen 56 bis zur Wind zugewandten Seite der als Außenhülle ausgebildeten Rotorblattwand 36 geführt ist, während die andere Druckleitung 56 bis zur Wind abgewandten Seite der Rotorblattwand 36 geführt ist. Beide Druckleitungen 56 übertragen den an der Rotorblattwand 36 vorherrschenden Druck an die Druckmessvorrichtung 5 zur Bestimmung der einzelnen Druckwerte. In Figur 4 ist dieses Ausführungsbeispiel in einem Querschnitt IV durch das Rotorblatt 32 dargestellt.

Weiter ist in Figur 2 dargestellt, dass mehrere Druckmessvorrichtungen 5 entlang des gesamten Rotorblattes 32 verteilt sein können. Damit ist es möglich Windlastunterschiede und den Lastverlauf entlang des gesamten Rotorblattes 32 zu bestimmen, die auf ein veränderliches Windströmungsprofil entlang des Rotorblattes zurückzuführen sind. Die Windströmung ist durch Pfeile 70 gekennzeichnet, wobei die unterschiedliche Länge der Pfeile 70 unterschiedliche Strömungsgeschwindigkeiten darstellen sollen. In dem in Figur 2 dargestellten Beispiel sind alle Druckmessvorrichtungen 5 mit einer Sende-/Empfangseinheit 500 verbunden, die in der Nabe 31 angeordnet ist. Mittels des Signalprozessors 532 der Auswerteeinheit 53 werden die entsprechenden zwei Druckmesswerte D1 und D2, beispielsweise durch Subtraktion, miteinander verglichen und ein Vergleichswert ΔD (z.B. ΔD = D2 - D1) ermittelt. Dieser Vergleichswert ΔD wird dann mit in einer Datenbank auf einem Speichermedium gespeicherten Referenzvergleichswerten ΔDrefₘ (m = 1, 2, ...) verglichen. Die Referenzvergeichswerte ΔDrefₘ wurden zuvor unter bekannten, definierten Bedingungen erfasst. Somit wird nach Übereinstimmung des Vergleichswerts ΔD mit einem der Referenzvergleichswerte ΔDrefₘ ein Messwert M1, M2, ... für die Windkraft am Ort der Druckaufnahmen auf das Rotorblatt 32 ermittelt.

Werden mehrer Lichtsignale LS regelmäßig in festen Zeitabständen hintereinander, insbesondere in einem gepulsten Modus, mit einer hinreichen hohen Wiederholrate von 500 Hz bis 10 kHz in die optischen Sensoren 7, 8 eingespeist, können eine durch die Wiederholrate bestimmte zeitliche folge von Messwerten M1, M2, ... für die Windkraft auf das Rotorblatt 32 bestimmt werden, die eine Abbildung der Dynamik des Rotorblatts 32 ermöglichen. So kann die Verformungs- bzw. Auslenkungsamplitude eines in Schwingung- oder in Vibration versetzten Rotorblatts 32 zeitaufgelöst ermittelt werden.

Von der Sende-/Empfangseinheit 500 erzeugte Messwerte M1, M2, ... werden beispielsweise mittels einer Funkübertragung zu einer in den Figuren nicht dargestellten Datenerfassungseinheit übermittelt. Die Datenübertragung kann jedoch grundsätzlich auch leitungsgebunden elektrisch oder optisch erfolgen. Außerdem können die Sende-/Empfangseinheit 500 und die Datenerfassungseinheit auch als gemeinsame Einheit ausgebildet sein.

Überschreitet der Betrag des Vergleichswert ΔD einen vorbestimmten Schwellwert, so wird von der Auswerteeinheit 53 direkt ein Warnsignal an die Datenerfassungseinheit übermittelt. Mit der Übermittlung des Warnsignals an die Datenerfassungseinheit kann also eine kritische Windkraft bestimmt werden. Es können somit rechtzeitig entsprechende Gegen- bzw. Reparaturmaßnahmen eingeleitet werden.

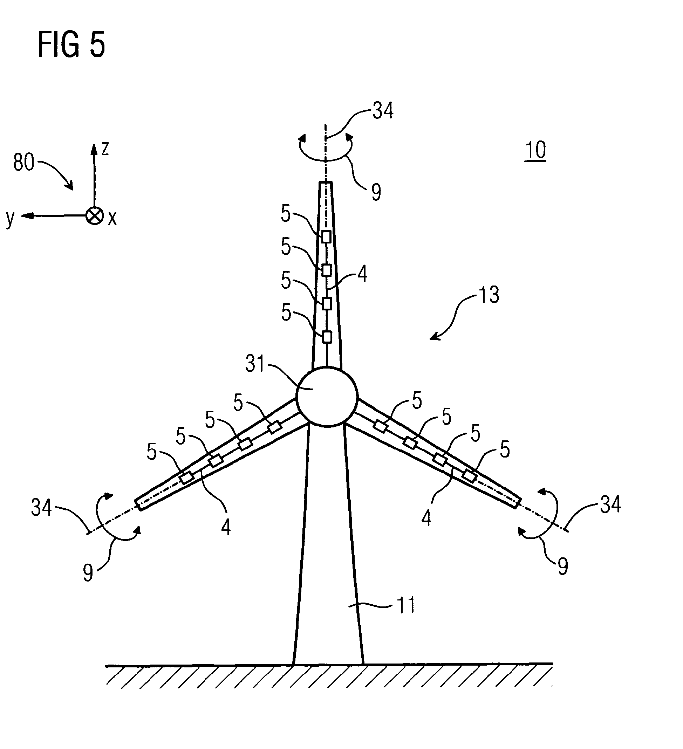

In Figur 5 ist eine erfindungsgemäße Windenergieanlage 10 mit einer Windkraftmessvorrichtung angegeben, deren Rotorblätter 32 jeweils mit zahlreichen Druckmessvorrichtungen 5 versehen sind. Die Druckmessvorrichtungen 5 sind dabei jeweils entlang des gesamten Rotorblatts 32 in Ausbreitungsrichtung der Längsachse 34 verteilt. Somit kann zu jedem Zeitpunk an jedem Längenabschnitt entlang jedes Rotorblattes 32 die Windkraft ermittelt werden und die Rotorblätter 32 individuell an die vorherrschenden Windstärkeverhältnisse beispielsweise durch entsprechende Drehung (Pitch) um die jeweilige Längsachse 34 angepasst werden. Vorzugsweise kann dies durch eine aktive adaptive Regelung der Rotorblattdrehung erfolgen.

Zur besseren Übersicht ist in den Figuren 2 bis 5 jeweils ein Koordinatensystem 80 mit einer x-, y- und z-Achse abgebildet. Der Einfachheit halber und nicht einschränkend wird angenommen, dass die zu untersuchende Windströmung 70 in x-Richtung gerichtet die Windenergieanlage 10 anströmt.

In Figur 3 wird kein erfindungsgemäßes Rotorblatt, sondern lediglich ein vergleichendes Beispiel dargestellt.

## Patentansprüche

1. Rotorblatt (32) einer Windenergieanlage (10), umfassend eine eine Außenhülle ausbildende Wand (36) und mindestens eine innerhalb des Rotorblattes (32) angeordnete Druckmessvorrichtung (5) mit einem gasdicht abgeschlossenen Hohlkörper (55), welcher mindestens eine druckabhängig verformbare Membrane (54) aufweist, wobei mindestens ein optischer Dehnungssensor (8) kraftschlüssig mit der mindestens einen Membrane (54) verbunden ist,
weiterhin umfassend eine weitere mit einem weiteren Dehnungssensor (8) versehene Membrane (54), wobei die beiden Membranen (54) auf einander gegenüberliegenden Seiten des Hohlkörpers (55) angeordnet sind und
wobei das Rotorblatt (32) zwei Druckleitungen (56) umfasst, die jeweils mit einer Membrane (54) der Druckmessvorrichtung (5) in Wirkverbindung stehen und zur Rotorblattwand (36) derart geführt sind, dass der Druck an der Wind zugewandten Seite der Außenhülle (36) von einer der beiden Druckleitungen (56) aufnehmbar ist und der Druck an der Wind abgewandten Seite der Außenhülle (36) von der anderen Druckleitung (56) aufnehmbar ist.

2. Rotorblatt (32) nach Anspruch 1, **dadurch gekennzeichnet, dass** der Dehnungssensor (8) als Faser-Bragg-Gitter-Sensor ausgeführt ist.

3. Rotorblatt (32) nach Anspruch 1 oder 2, **gekennzeichnet durch** mindestens einen Temperatursensor (7) zur Bestimmung der Temperatur des Hohlkörpers (55).

4. Rotorblatt (32) nach Anspruch 3, **dadurch gekennzeichnet, dass** der Temperatursensor (7) als Faser-Bragg-Gitter-Sensor ausgeführt ist.

5. Rotorblatt (32) nach einem der vorhergehenden Ansprüche, **dadurch gekennzeichnet, dass** der Hohlkörper (55) aus einem isolierenden Werkstoff, insbesondere Glas oder Polymethylmethacrylat, ausgebildet ist.

6. Rotorblatt (32) nach einem der vorangehenden Ansprüche, **gekennzeichnet durch** mehrere in Ausbreitungsrichtung der Längsachse (34) des Rotorblattes (32) verteilte Druckmessvorrichtungen (5).

7. Windenergieanlage (10) mit zumindest einem Rotorblatt (32) nach einem der vorangehenden Ansprüche.

8. Windenergieanlage (10) nach Anspruch 7, **gekennzeichnet durch** mehrere um ihre Längsachse (34) unabhängig voneinander drehbare Rotorblätter (32).

9. Windenergieanlage (10) nach Anspruch 8, **dadurch gekennzeichnet, dass** jedes Rotorblatt (32) mit mindestens einer Druckmessvorrichtung (5) versehen ist und eine Rotorblattsteuereinheit vorgesehen ist, mit welcher die jeweilige Drehposition jedes Rotorblatts (32) um seine Längsachse (34) in Abhängigkeit der mittels einer Auswerteeinheit (53) bestimmten Windkraft am jeweiligen Rotorblatt (32) steuerbar ist.

10. Verfahren zur Bestimmung der auf das Rotorblatt (32) nach einem der vorangehenden Ansprüche wirkenden Windkraft, bei welchem mittels einer Auswerteeinheit (53) der Druck an der Wind zugewandten Seite der Außenhülle (36) mit dem Druck an der Wind abgewandten Seite der Außenhülle (36) verglichen, ein Vergleichswert (ΔD) bestimmt und aus dem Vergleichswert ein Messwert (M1, M2) für die auf das Rotorblatt (32) wirkende Windkraft bestimmt wird.

11. Verwendung des Verfahrens nach Anspruch 10 zum optimierten Betrieb und/oder Schutz der Windenergieanlage (10) nach einem der Ansprüche 7 bis 9, bei welcher die Windkraft an jedem einzelnen Rotorblatt (32) bestimmt wird und in Abhängigkeit der jeweiligen Windkraft jedes Rotorblatt (32) um seine Längsachse (34) ausgerichtet wird.

## Claims

1. Rotor blade (32) of a wind energy installation (10), comprising a wall (36) forming an outer shell, and at least one pressure measurement device (5) arranged inside the rotor blade (32) and having a hollow body (55) that is closed in a gastight fashion and has at least one pressure deformable diaphragm (54), at least one optical strain sensor (8) being non-positively connected to the at least one diaphragm (54), furthermore comprising a further diaphragm (54) provided with a further strain sensor (8) the two diaphragms (54) being arranged on mutually opposite sides of the hollow body (55), and
in which the rotor blade (32) comprises two pressure lines (56) that are each actively connected to a diaphragm (54) of the pressure measurement device (5) and are led to the rotor blade wall (36) in such a way that the pressure at the side of the outer shell (36) facing the wind can be picked up by one of the two pressure lines (56), and the pressure at the side of the outer shell (36) averted from the wind can be picked up by the other pressure line (56).

2. Rotor blade (32) according to Claim 1, **characterized in that** the strain sensor (8) is designed as a fiber Bragg grating sensor.

3. Rotor blade (32) according to Claim 1 or 2, **characterized by** at least one temperature sensor (7) for determining the temperature of the hollow body (55).

4. Rotor blade (32) according to Claim 3, **characterized in that** the temperature sensor (7) is designed as a fiber Bragg grating sensor.

5. Rotor blade (32) according to one of the preceding claims, **characterized in that** the hollow body (55) is formed from an insulating material, in particular glass or polymethylmethacrylate.

6. Rotor blade (32) according to one of the preceding claims, **characterized by** a number of pressure measurement devices (5) distributed in the direction of extension of the longitudinal axis (34) of the rotor blade (32).

7. Wind energy installation (10) having at least one rotor blade (32) according to one of the preceding claims.

8. Wind energy installation (10) according to Claim 7, **characterized by** a number of rotor blades (32) that can be rotated independently of one another about their longitudinal axis (34).

9. Wind energy installation (10) according to Claim 8, **characterized in that** each rotor blade (32) is provided with at least one pressure measurement device (5), and a rotor blade control unit is provided with the aid of which the respective rotary position of each rotor blade (32) about its longitudinal axis (34) can be controlled as a function of the wind force, determined by means of an evaluation unit (53), at the respective rotor blade (32).

10. Method for determining the wind force acting on the rotor blade (32) according to one of the preceding claims, in which with the aid of an evaluation unit (53) the pressure at the side of the outer shell (36) facing the wind is compared with the pressure at the side of the outer shell (36) averted from the wind, a comparison value (ΔD) is determined, and a measured value (M1, M2) for the wind force acting on the rotor blade (32) is determined from the comparison value.

11. Use of the method according to Claim 10 for the optimized operation and/or protection of the wind energy installation (10) according to one of Claims 7 to 9, in which the wind force at each individual rotor blade (32) is determined and each rotor blade (32) is aligned about its longitudinal axis (34) as a function of the respective wind force.

## Revendications

1. Lame ( 32 ) de rotor d'une éolienne ( 10 ), comprenant une paroi ( 36 ) formant une enveloppe extérieure et au moins un dispositif ( 5 ) de mesure de la pression, qui est disposé à l'intérieur de la lame ( 32 ) de rotor et qui a un corps ( 55 ) creux fermé d'une manière étanche au gaz, qui a au moins une membrane ( 54 ) déformable en fonction de la pression, au moins un capteur ( 8 ) optique d'allongement étant relié à complémentarité de force à la au moins une membrane ( 54 ),
comprenant, en outre, une autre membrane ( 54 ) pourvue d'un autre capteur ( 8 ) d'allongement, les deux membranes ( 54 ) étant disposées sur des côtés opposés l'un à l'autre du corps ( 55 ) creux et
la lame ( 32 ) de rotor comprenant deux conduits ( 56 ) sous pression, qui coopèrent respectivement avec une membrane ( 54 ) du dispositif ( 5 ) de mesure de la pression et sont guidés vers la paroi ( 36 ) de la lame de rotor, de manière à ce que la pression du côté tourné vers le vent de l'enveloppe ( 36 ) extérieur puisse être enregistrée par l'un des deux conduits ( 56 ) sous pression et de manière à ce que la pression du côté éloigné du vent de l'enveloppe ( 36 ) extérieure puisse être enregistrée par l'autre conduit ( 56 ) sous pression.

2. Lame ( 32 ) de rotor suivant la revendication 1, **caractérisée en ce que** le capteur ( 8 ) d'allongement est réalisé en capteur à fibres à réseau de Bragg.

3. Lame ( 32 ) de rotor suivant la revendication 1 ou 2, **caractérisée par** au moins un capteur ( 7 ) de température pour la détermination de la température du corps ( 55 ) creux.

4. Lame ( 32 ) de rotor suivant la revendication 3, **caractérisée en ce que** le capteur ( 7 ) de température est réalisé en capteur à fibres à réseau de Bragg.

5. Lame ( 32 ) de rotor suivant l'une des revendications précédentes, **caractérisée en ce que** le corps ( 55 ) creux est en matériau isolant, notamment en verre ou en poly(méthacrylate de méthyle).

6. Lame ( 32 ) de rotor suivant l'une des revendications précédentes, **caractérisée par** plusieurs dispositifs ( 5 ) de mesure de la pression répartis dans la direction dans laquelle s'étend l'axe ( 34 ) longitudinal de la lame ( 32 ) de rotor.

7. Eolienne ( 10 ) ayant au moins une lame ( 32 ) de rotor suivant l'une des revendications précédentes.

8. Eolienne ( 10 ) suivant la revendication 7, **caractérisée par** plusieurs lames ( 32 ) de rotor tournant indépendamment les unes des autres autour de leur axe ( 34 ) longitudinal.

9. Eolienne ( 10 ) suivant la revendication 8, **caractérisée en ce que** chaque lame ( 32 ) de rotor est pourvue d'au moins un dispositif ( 5 ) de mesure de la pression et il est prévu une unité de commande de lame de rotor, par laquelle la position respective en rotation de chaque lame ( 32 ) de rotor autour de son axe ( 34 ) longitudinal peut être commandée en fonction de la force du vent sur chaque lame ( 32 ) de rotor déterminée au moyen d'une unité ( 53 ) d'évaluation.

10. Procédé de détermination de la force du vent agissant sur la lame ( 32 ) de rotor suivant l'une des revendications précédentes, dans lequel on compare au moyen d'une unité ( 53 ) d'évaluation la pression du côté, tourné vers le vent, de l'enveloppe ( 36 ) extérieure à la pression du côté, éloigné du vent, de l'enveloppe ( 36 ) extérieure, on détermine une valeur ( ΔD ) de comparaison et, à partir de la valeur de comparaison, on détermine une valeur ( M1, M2 ) de mesure pour la force du vent agissant sur la lame ( 32 ) de rotor.

11. Utilisation du procédé suivant la revendication 10 pour le fonctionnement optimisé et/ou la protection de l'éolienne ( 10 ) suivant l'une des revendications 7 à 9, dans laquelle on détermine la force du vent sur chaque lame ( 32 ) de rotor individuelle et, en fonction de la force du vent respective, on oriente chaque lame ( 32 ) de rotor autour de son axe ( 34 ) longitudinal.
